(19) Europäisches Patentamt
European Patent Office
Office européen des brevets

(11) **EP 2 962 401 B1**

(12) **EUROPEAN PATENT SPECIFICATION**

(45) Date of publication and mention
of the grant of the patent:
**29.09.2021 Bulletin 2021/39**

(51) Int Cl.:
**H04B 1/10** *(2006.01)*    **H04L 25/03** *(2006.01)*

(21) Application number: **14757470.1**

(22) Date of filing: **20.02.2014**

(86) International application number:
**PCT/US2014/017519**

(87) International publication number:
**WO 2014/133874 (04.09.2014 Gazette 2014/36)**

(54) **SYSTEM FOR AND METHOD OF REMOVING UNWANTED INBAND SIGNALS FROM A RECEIVED COMMUNICATION SIGNAL**

SYSTEM UND VERFAHREN ZUR ENTFERNUNG UNERWÜNSCHTER BANDINTERNER SIGNALE AUS EINEM EMPFANGENEN KOMMUNIKATIONSSIGNAL

SYSTÈME ET PROCÉDÉ DE SUPPRESSION DE SIGNAUX INTRA-BANDES INTEMPESTIFS, À PARTIR D'UN SIGNAL DE COMMUNICATION REÇU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 US 201313778079**

(43) Date of publication of application:
**06.01.2016 Bulletin 2016/01**

(73) Proprietor: **Glowlink Communications Technology, Inc.**
**Los Altos, CA 94022 (US)**

(72) Inventors:
• **DOWNEY, Michael L.**
**Los Altos, California 94022 (US)**
• **CHU, Jeffrey C.**
**Los Altos, California 94022 (US)**

(74) Representative: **Round, Edward Mark et al**
**Marks & Clerk LLP**
**15 Fetter Lane**
**London EC4A 1BW (GB)**

(56) References cited:
**US-A1- 2003 012 313    US-A1- 2006 223 479**
**US-A1- 2008 153 448    US-A1- 2009 245 438**
**US-A1- 2011 135 043    US-A1- 2011 305 306**

• **GOOCH R P ET AL: "Demodulation of cochannel QAM signals", 19890523; 19890523 - 19890526, 23 May 1989 (1989-05-23), pages 1392-1395, XP010082605,**
• **None**

EP 2 962 401 B1

**Description**

This application is a continuation-in-part of U.S. Publication No. US 2011/0135043, filed April 2, 2010, which claims the benefit of U.S. Provisional Application No. 61/266,312, filed December 3, 2009.

Field of the Invention

The invention relates to a novel system for and method of removing unwanted inband signals from a received communication signal, thereby improving the quality of the received communication.

Background

Information can be transmitted across distances by encoding the information onto a carrier and transmitting the resulting communication signal across different types of wired or wireless media. At the receiving end, a composite signal is received that includes both the desired communication signal as well as other signals that become added either intentionally or unintentionally to and within the bandwidth of the desired communication signal. These other signals may include noise, interferences or any other undesirable signals, and are generally unwanted because they collectively and individually contribute to the degradation of the quality of the received communication signal. Because they are present within the frequency range (i.e. bandwidth) of the desired communication signal, these other signals are referred to as being "inband."

The quality of a received communication signal, such as that carried on a TV channel or a radio channel, can be expressed as a ratio of carrier power (C) to noise power (N), where C represents the power of the desired received communication signal and N represents the aggregate power of all the unwanted signals present in the bandwidth of the carrier. This invention is directed toward improving the quality of the received communication signal by removing these unwanted signals from the received communication signal.

US 2011/0135043 proposes a system for and a method of removing one or more unwanted inband signals from a received communications signal. The inband signal or signals may comprise noise, interference signals, or any other unwanted signals that impact the quality of the underlying communications. A receiver receives a communication signal, the received communication signal including the desired communication signal and one or more inband signals. A signal processor processes the received signal to form an estimate of the desired communication signal and an estimate of the inband signals. The estimate of the inband signals is thereby removed from the received signal. The estimate of the desired communication signal and the estimate of the inband signals are formed without prior knowledge of characteristics of the inband signals and without obtaining a copy of any of the inband signals from any source other than the received signal.

Summary

According to a first aspect of the present invention, there is provided a system as set out in claim 1. According to a second aspect of the present invention, there is provided a method as set out in claim 14. A system for and method of removing one or more unwanted inband signals from a received communications signal is described. The inband signal or signals may comprise noise, interference signals, or any other unwanted signals that impact the quality of the underlying communications. A receiver receives a communication signal, the received communication signal including the desired communication signal and one or more inband signals. A signal separator processes the received signal to form an estimate of the desired communication signal and an estimate of the inband signals. A performance improver processes the received signal and the estimate of the one or more inband signals to form an improved estimate of the desired communication signal and an improved estimate of the inband signals.

Brief Description of the Drawings

Figure 1 illustrates a block diagram of an inband signal remover in accordance with an embodiment of the present invention;

Figure 2 illustrates a system for receiving and processing a communication signal in accordance with an embodiment of the present invention;

Figure 3 illustrates a constellation diagram of a received communication signal in accordance with an embodiment of the present invention;

Figure 4 illustrates a constellation diagram of the signal of Figure 2 after having been processed in accordance with an embodiment of the present invention;

Figure 5 illustrates a constellation diagram of a received communication signal along with an unwanted signal in accordance with an embodiment of the present invention;

Figure 6 illustrates a constellation diagram of the signal of Figure 5 after having been processed in accordance with an embodiment of the present invention;

Figure 7 illustrates an inband signal separator in accordance with an embodiment of the present invention;

Figure 8 illustrates a block diagram of an enhanced signal separator in accordance with an embodiment of the present invention;

Figure 9 illustrates a system employing the enhanced signal separator in conjunction with a signal demodulator in accordance with an embodiment of the present invention;

Figure 10 illustrates a system employing the enhanced signal separator in conjunction with two signal demodulators in accordance with an embodiment of the present invention; and

Figure 11 illustrates a block diagram of a performance improver in accordance with an embodiment of the present invention.

Description of an Embodiment of the Invention

We describe a new system and method for removing unwanted inband signals from a received communication signal thereby improving the quality of the communication signal. As used herein, the term "rcccivcd communication signal" refers to a composite signal that includes both an information bearing communication signal (also referred to as a "desired" communication signal), and other signals that simultaneously occupy the same bandwidth that are either unanticipated or undesired (also referred to as "unwanted" signals). These unwanted signals include noise, interferences and any other inband signal that is not the desired communication signal. These signals are "unwanted" because they collectively and individually contribute to the degradation of the quality of the received communication signal. While undesired out-of-band signals can be readily filtered off by a frequency-selective filter, these inband unwanted signals cannot generally be filtered off. Therefore, the inband signals are more difficult to remove, especially if no prior knowledge of the characteristics of the inband signals are available.

The method does not require prior knowledge of characteristics of the unwanted inband signals, nor does it require a copy of any of the unwanted inband signals to be available from any source other than the composite signal itself. Thus, all processing is conducted solely from the composite received signal, which has both the desired communication signal and the unwanted signals in it. Because of this, random noise can be removed in addition to removing other inband signals, such as interferers.

To help illustrate this invention, consider the following received communication signal

$$S = C + I1 + I2 + \ldots + In + NoB \qquad \text{(equation 1)}$$

Where,

S represents the composite received signal that includes both the desired communication signal and the unwanted inband signals
C represents the desired communication signal
I1 represents the first unwanted signal
In represents the nth unwanted signal and
NoB represents the received random noise

As such, we can describe the received carrier-to-noise performance of this signal as

$$\text{Carrier-to-noise} = C/(I1+I2+..+In+NoB) \quad (\text{equation 2})$$

Using this invention, the unwanted signal components, I1, I2,.., In and NoB can be estimated from the received signal S. These estimates can be described as follows

I1* - Estimate of first unwanted signal component
I2* - Estimate of second unwanted signal component
In* - Estimate of nth unwanted signal component
NoB* - Estimate of received random noise

If we use these estimates to cancel the unwanted signal components, then we come up with the following

$$\varepsilon = I1\text{-}I1^* + I2\text{-}I2^* + \ldots + In - In^* + NoB - NoB^* \quad (\text{equation 3})$$

Where $\varepsilon$ represents the residual error after the cancellation. Using this approach, the received carrier to noise performance of our communication signal can be expressed as $C/\varepsilon$, where $\varepsilon \ll (I1 + I2 + \ldots + In + NoB)$ if the estimates of the undesirable components are sufficiently close to the actual components themselves.

This novel technique can be used in several different ways to improve the quality of a received communication signal as well as the capacity of a communications channel. In one formulation of this invention, it can be used to improve the effective received carrier-to-noise ratio when a communication signal is received with unwanted random noise, such as statics. By estimating and then removing the noise to within range of the error, $\varepsilon$, the received carrier-to-noise ratio can be improved. This aspect of the invention would save power-and therefore energy consumption-by allowing communication signals to be transmitted at lower powers, and still be received with the same quality.

In another aspect of this invention, this technique can be used to remove one or more unwanted interfering signals that are received within the bandwidth of the desired communication signal. By estimating the interfering signals and then removing them to within range of the error, $\varepsilon$, the quality of the received communication signal can be improved.

In a third aspect of this invention, it can be used to increase the communication capacity of a channel by allowing two or more communication signals to be transmitted simultaneously in the same bandwidth. In this formulation of the invention, both the desired carrier (C) and an inband interfering signal are communication signals. But, from the point-of-view of the desired carrier (C), the inband signal is an unwanted interferer. However, from the point-of-view of the inband signal (which is itself an desired communication signal), the carrier (C) is an unwanted interferer. The invention can be used to separate out these various communication signals from one another, effectively allowing multiple carriers to simultaneously share the same communications channel, and thereby resulting in a net gain in the capacity of the communications channel. The capacity increase that can be gained using this technique, for a given modulation scheme, can be described as shown in equation 4 below

$$Ci = (M\text{-}1)^*100\% \quad (\text{equation 4})$$

Where Ci is the channel capacity improvement and M is the number of overlapped communication signals. For example, two communication signals (M=2) transmitted this way would result in a 100% increase in capacity(i.e., (2-1)*100%).

An advantage of this method is that it does not need a copy of a given unwanted signal in order to remove it and obtain the desired signal.

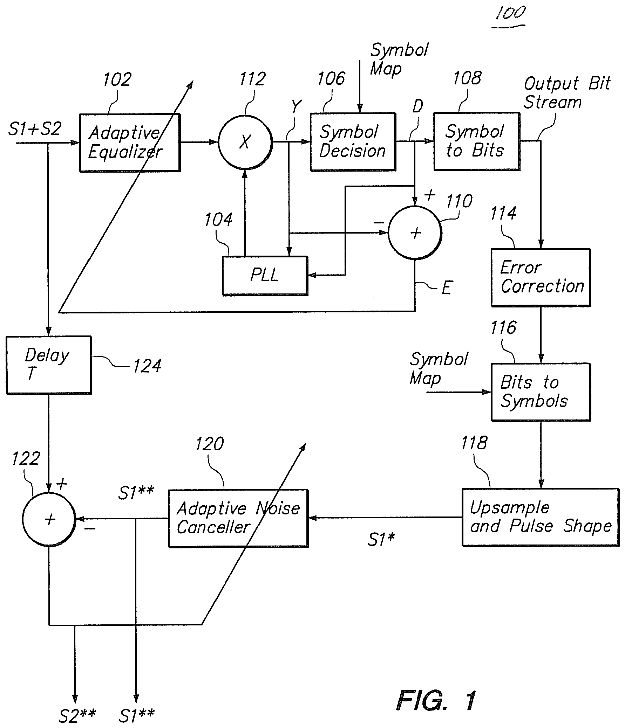

Figure 1 shows a system block diagram of a signal remover 100 in accordance with an embodiment of the present invention. As shown in Figure 1, the input signal S1 denotes the desired communication signal and S2 the unwanted signals which are received simultaneously in the same channel. S1 and S2 can be completely independent, meaning that S2 does not have to be related to S1 in any way such as, for example, when S2 is a modified version of S1.

The signals S1 and S2 may be preprocessed prior to being processed by the signal remover 100. This may include, but not limited to, simultaneously receiving the combined signals S1+S2, and digitizing, filtering and resampling the signals.

In an embodiment of the present invention, S1 and S2 are presumed to be different in someway as, for example, the following:.

$$P_{s2} < P_{s1},$$

where

$P_{s1}$ = Received power of S1
$P_{s2}$ = Received power of S2

Using this framework, we now walk through the block diagram of Figure 1. Starting from the top left, S1 and S2 are received together and input to a first block (102). The processing steps are described in order below:

The signal S1 is demodulated using a processor, such as an adaptive equalizer or a matched filter. Figure 1 shows an adaptive equalizer 102, but a matched filter, or some other processing scheme, can be used as well. Thus, referring to Figure 1, the demodulation is performed by the adaptive equalizer 102, a phase lock loop (PLL) 104, a symbol decision block 106 and a symbols-to-bits converter block 108. With the condition that $P_{s2} < P_{s1}$, this demodulation stage will demodulate signal S1 (if the condition were such that $P_{s2} > P_{s1}$, then the demodulated signal would be S2). In some circumstances, the demodulation stage can also demodulate the signal S1 even in the presence of higher power S2 signals. An example of this would be if S2 was only partially overlapping in frequency with S1.

The adaptive equalizer 102 receives the combined signals S1+S2. The adaptive filter coefficients are updated using an adaptive algorithm such as the Least Mean Squared (LMS) error algorithm, which attempts to minimize the feedback signal E from summation block 110. The adaptive filter generates at its output an equalized estimate of S1 symbols. This equalized estimate is applied to a multiplier 112 along with a phase difference signal from the PLL 104 to generate a phase-compensated estimate of S1 symbols at the output of the multiplier 112 (this signal is labeled "Y" in Figure 1). This phase-compensated estimate of S1 symbols is provided to the symbol decision block 106 which outputs S1 symbols from a symbol map based on the phase-compensated estimate of S1 symbols (the output signal is labeled "D" in Figure 1). In an embodiment of this invention, the symbol map for the signal S1 can be known in advance or derived from the received signal S1, such as is described in U.S. Patent No. 7,639,761.

The output D of the symbol decision block 106 is applied to the symbols-to-bits block 108, to the summation block 110 and to the PLL 104. The summation block 110 determines a difference between each S1 symbol output from the symbol decision block 106 and the corresponding Si symbol that was input to the symbol decision block 106 to form the feedback signal E which is used to adjust the equalizer parameters. The PLL 104 uses the phased-compensated Si symbols from the multiplier 112 and the symbols output from the symbol decision block 106 to form the phase correction which is applied to the multiplier 112. Thus, the PLL 104 causes the demodulation stage to lock to the signal S1 by tracking and adjusting the phase offset from the equalizer output. The greater power of Si results in locking to Si rather than to S2.

The symbols-to-bits block 108 converts the phase compensated estimate of the symbols (the signal "D") to a Si output bit stream. This bit stream represents the demodulated estimate of S1 bits.

Error correction can be performed on the demodulated S1 signal to correct some or all of the errors incurred during the demodulation process if forward error correction information is embedded in S1. Referring to Figure 1, error correction is performed by an error correction block 114. The output of the error correction block 114 is an-error corrected version of the Si estimate and is different from the demodulated signal in that bit errors are reduced. It should be noted that in an embodiment of this invention, the error correction block 108 may be omitted. Error correction may be omitted where the signal S1 does not include forward error correction information.

The bits are converted into symbols using the symbol map for signal Si. This process is performed by a bits-to-symbols block 116 shown in Figure 1 and can use the known symbol map, or a symbol map that is derived from the received signal S1, as described above.

Pulse shaping and upsampling can also be performed. The upsampling is used to match the sampling rate of the signal Si at the input. The input sampling rate should be a multiple of the symbol rate of S1 such as 2 samples/symbol. Referring to Figure 1, this is performed by an upsample and pulse shape block 118. The pulse shaping applied should match the S1 transmit pulse shaping. The output of this step is an estimate of S1. This estimated signal is denoted as S1*. If the pulse shaping of S1 is unknown, then the pulse shaping step can be omitted. This is because an adaptive filter configured as an adaptive noise canceller 120, discussed below, will also attempt to pulse shape the estimate, S1*, to match that of the input signal S1. Therefore, where the pulse shaping of S1 is known, it can be applied to the estimated signal; otherwise, pulse shaping may be omitted.

The S1* estimate is then input to the adaptive noise canceller block 120. The adaptive noise canceller 120 adaptively cancels the estimate of S1 from the combined received signal S1+S2. The adaptive noise canceller 120 can provide two outputs:

a. The error signal from the adaptive canceller 120, which in this case is an estimate of S2, which is referred to as S2**.
b. A revised estimate of S1, which is referred to as S1**. The adaptive noise canceller 120 generates this revised estimate S1** by attempting to minimize the error $\varepsilon$ which is the difference between S1** and S1.

The signal S1** from the adaptive noise canceller 120 is applied to a summation block 122. The input signals S1+S2 are applied to a delay block 124 and, then, to the summation block 122. The delay block 124 delays the combined input signal (that includes S1 and S2) with respect to the S1** signal output from the noise canceller 120 by an amount of time equal to the time that the signal S1** is delayed so that the signals applied to the summation block 122 are aligned in time.

The summation block 122 determines a difference between the delayed combined signal S1+S2 and the estimated signal S1**. This difference is the signal S2**. The signal S2** is used as an error signal by the adaptive noise canceller 120 in feedback loop that minimizes S2**. Accordingly, the estimate of the unwanted signals, represented by S2**, is removed from the combined received signal S1+S2. The parameters of the adaptive noise canceller can be updated using an adaptive algorithm such as the LMS or other suitable adaptive algorithms.

Since S1** is an estimate of S1, then the relationship between S1 and S1** can be expressed as follows

$$S1** = S1 + \varepsilon \quad \text{(equation 5)}$$

From the block diagram we can then derive that

$$S2** = (S1 + S2) - S1** \quad \text{(equation 6)}$$

This can be simplified as follows by substituting equation 5

$$S2** = S1 + S2 - S1 - \varepsilon = S2 - \varepsilon \quad \text{(equation 7)}$$

From equations 5 and 7 wc see that the received signal S1+S2 has been separated into estimates S1** and S2** and that the fidelity of the separation is indicated by the error $\varepsilon$. Therefore, a composite received signal that includes both a desired communication signal and one or more unwanted inband signals is processed such that the unwanted inband signals are removed from the received signal leaving the desired signal available for further use. Additionally, the removed inband signals are separately available for further use.

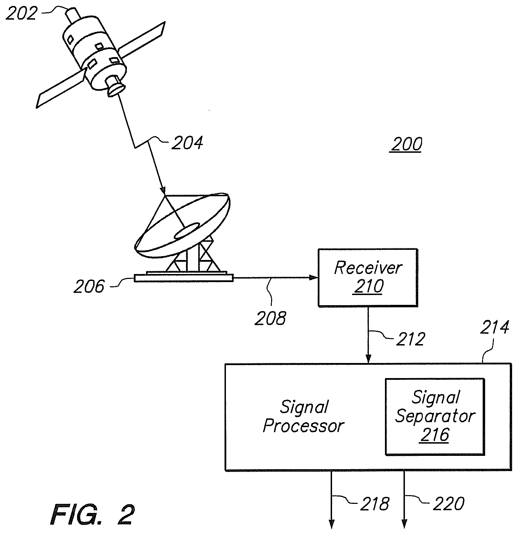

Figure 2 illustrates system 200 for receiving and processing a communication signal in accordance with an embodiment of the present invention. An example of such a communication system 200 includes a satellite 202 that transmits a signal 204 that is then received by a satellite dish 206. The communication system 200 may include equipment other than the satellite 202 and the satellite dish 206; for example, the communication system may include, but is not limited to, a radio transmitter, a cable transmitter, a cell tower, a microwave transmitter, an optical transmitter; an antenna, a microwave dish, or an optical receiver. The present invention is applicable to any communication system that communicates a communication signal from a transmitter to a receiver, regardless of the medium or the communication signal frequency.

A signal 208 which includes a desired communication signal and unwanted signals is received by a receiver 210. From the receiver 210, a signal 212 is passed to a signal processor 214 which includes an unwanted signal remover 216 (which can be identical to the signal remover 100 in Figure 1). The signal processor 214 may perform signal processing on the signal in addition to the processing by the unwanted signal remover 216 though this is not necessary. For example, the signal processor 214 may perform preprocessing on the received signal prior to its being processed by the remover 216. A signal 218 output from the signal processor 214 is an estimate of the desired communication signal S1 (which is referred to herein above as the signal S1**). Another signal 220 may be output from the remover 216 and signal processor 214. This signal 220 corresponds to the error signal S2** which as discussed above is an estimate of signal S2. The signal 220 may include noise, interference or other unwanted signals.

Either or both of the signals 218 and 220 may be provided to a computer system display so that they can be viewed or input to other equipment that makes use of the output signals 218 and/or 220, such as communications modems. For example, the signals 218 and/or 220 can be processed to determine, and to possibly also display, their properties, such as spectral properties (e.g. their frequency spectrum) or communication parameters (e.g. center frequency or encoding scheme). Therefore, as a further example, the system 200 can be used to detect and extract interference signals for the purpose of signal monitoring. Thus, the output signals 218 and 220 may be further processed to determine their spectral properties which may then be displayed as a spectrum display. The output signals 218 and 220 may also be stored in computer data storage for later use.

The receiver 210 and the signal processor 214 are each implemented with hardware circuits and may also include related software that controls at least a portion of the hardware. While the received signal is being processed by the signal remover 216, at least portions or components of the signal that are being actively processed are at least temporarily stored in the hardware circuitry that performs the signal processing steps. Additionally, the symbol map discussed herein may also be at least temporarily stored in the hardware.

Example 1 - S2 as Random Noise

In one formulation of the invention, consider S1 to be the desired communications carrier signal and S2 to be uncorrelated random noise received with the signal. If we follow this scenario through the block diagram we will end up with the following from equations 5 and 7

$$S1** = S1 + \varepsilon$$

$$S2** = S2 + \varepsilon$$

In this case, however, S2 is random noise. If we replace S2 with the notation N, we get the following

$$N** = N + \varepsilon \quad \text{(equation 8)}$$

If $\varepsilon$ is smaller than N, then we have effectively improved the received carrier-to-noise ratio of S1. From the block diagram, the input is S1 + N. which would have a carrier-to-noise ratio of S1/N. From equation 5, the system's output signal is S1 + $\varepsilon$, resulting in the following cause and effect:

$$\text{If } \varepsilon < N, \text{ then } S1/\varepsilon > S1/N \quad \text{(equation 9)}$$

From equation 9, we see that the received carrier-to-noise ratio has been improved. The following diagrams show a specific example of how this invention can be used to gain an improvement in the received carrier-to-noise ratio of a communication signal.

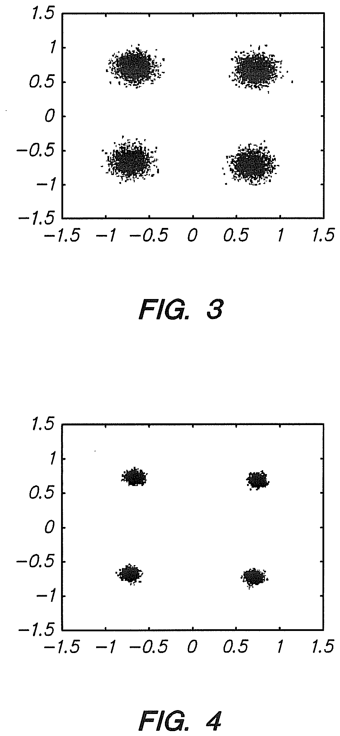

Figure 3 shows a constellation diagram of a received QPSK communications carrier signal with a received carrier-to-noise ratio of approximately 17 dB. Thus, Figure 3 shows a received signal which can be represented as S1 + N. Figure 4 shows a constellation display of the output signal, S1 + $\varepsilon$, after running this signal though the processing steps of this invention. The output signal can be represented as S1** where S1** = S1 + $\varepsilon$. Qualitatively, it is easy to see that the receive performance has been improved. In this particular case, $\varepsilon$ is 7 dB smaller than N, and therefore the received carrier-to-noise ratio was improved to 24 dB. For this particular example, S1 does not include any forward error correction information and therefore the demonstrated cancellation gain is somewhat conservative.

Example 2 - S2 as an Unwanted Interfering Signal

In a second formulation of this invention, consider S1 to be our encoded communications carrier signal and S2 to be an unwanted interference signal. From the input, we know that the received carrier-to-noise ratio of S1 will be limited by the interfering signal S2 and will be no better than S1/S2. From equation 5, we know that after the cancellation process,

$$S1** = S1 + \varepsilon$$

To illustrate the invention under this scenario, we have used the same communications carrier signal S1 which was used in Example 1(a QPSK carrier with a baseline performance of 17 dB - without S2 present). For S2, we have injected an interferer which is a communications carrier that is also QPSK. S2 has a bandwidth that is similar to S1 and is fully overlapping in frequency with S1. The total power of carrier S1 is greater than the total power of the interfering signal S2.

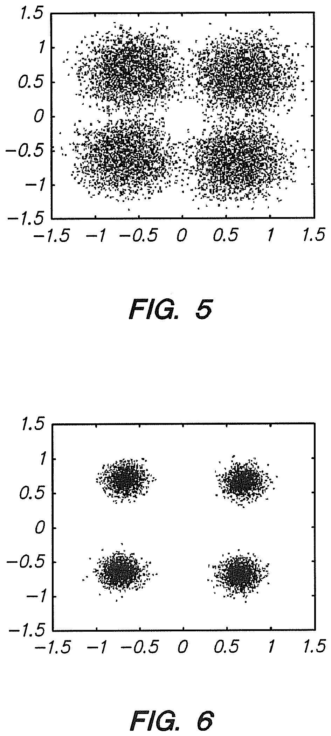

Figures 5 and 6 show the received performance of S1 before and after running through the system. More specifically, Figure 5 illustrates the receive performance of S1 with S2 present. Figure 5 illustrates the receive performance of S1 after S2 has been removed using this invention. The output signal can be represented as S1** where S1** = S1 + $\varepsilon$. Intuitively, it is easy to see the performance improvement. Under this scenario, the received carrier-to-noise performance of our estimate, S1**, is within ½ dB of the baseline case, meaning that the degradation of S1 due to S2 has almost been completely irradicated. For this example, S1 does not include any forward error correction information. With forward error correction, the demonstrated performance gain should be even better.

Example 3 - S2 as another Communications Carrier

In a third formulation of this invention, consider both S1 and S2 to be planned communications carriers. From equation 5 and 7 we know that S1 and S2 will be separated and output as follows.

$$S1^{**} = S1 + \varepsilon$$

$$S2^{**} = S2 + \varepsilon$$

Under this scenario, S1 and S2 are both communication signals that are overlapping in both frequency and time. Both are desired communication signals in their own right. However, each also appears to be an unwanted interferer to the other (as in Example 2). In practice, by transmitting S1 and S2 this way, an improvement in capacity can be gained. For example, consider the previous example where two QPSK carriers are transmitting in the same bandwidth. If S1 and S2 are separated to within an acceptable error, $\varepsilon$, then twice the amount of information can be transmitted over the same channel. In essence, the capacity of the channel is doubled by this invention.

In the case where the invention is being used to improve channel capacity, the separation process described herein can be run recursively to separate more than two carriers. For example, assume that S2 represents two distinct communications signals. After the first pass of signal separation, the output would be as in equation 7. If this output is then fed back into the input of the block diagram shown in Figure 1 (which may be performed by the same hardware or by duplicate hardware), this process can be repeated to separate S2 into the two distinct signals. Thus, this invention can be used to recursively separate multiple desired communication signals that are overlapping in frequency and time. When applied this way, the invention can improve the channel capacity for a given modulation scheme as shown in equation 4.

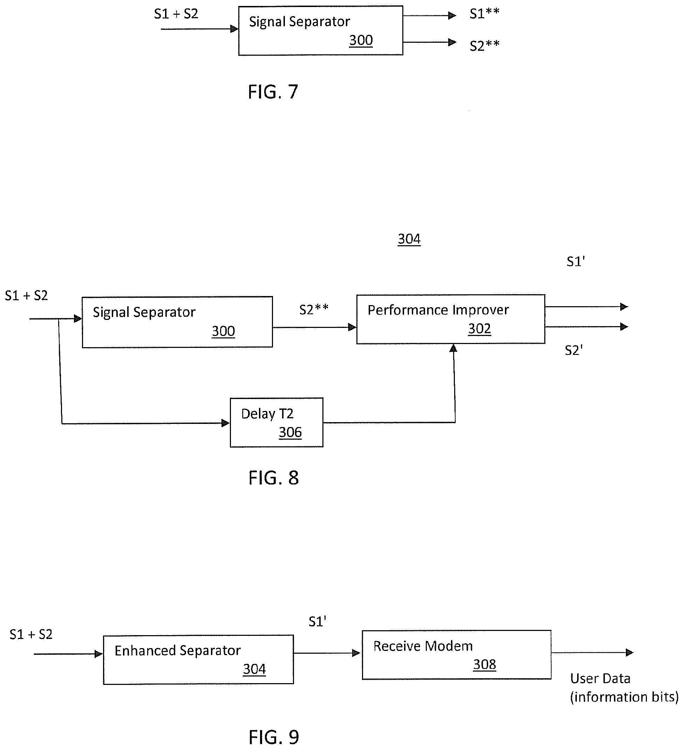

Figure 7 illustrates an inband signal separator 300 in accordance with an embodiment of the present invention. The signal separator 300 shown in Figure 7 can be identical to the signal remover 100 shown in Figure 1. As shown in Figure 7, the signal separator 300 receives the combined signals S1 + S2 and forms an estimate S1** of the communication signal S1 and an estimate S2** of any inband signals S2.

Figure 8 illustrates a block diagram of an enhanced signal separator 304 in accordance with an embodiment of the present invention. As shown in Figure 8, the estimate S2** formed by the signal separator 300 is input to a performance improver 302. The combined signals S1 + S2 are delayed by a delay block 306 and the delayed combined signals S1 + S2 are also input to the performance improver 302. The performance improver 302 forms an improved estimate S1' of the communication signal S1 and an improved estimate S2' of the inband signal S2.

Using the estimate of the inband signal S2**, the performance improver 302 performs a second stage of processing to cancel this estimate, S2**, from the received composite signal, S1 + S2. The improvement to the invention can provide a significant bit error rate (BER) improvement. For example, this improvement has shown to improve the bit error rate BER of the desired communication signal S1 by over 50 dB (by improving receive BER from 10-3 to 10-8).

Figure 9 illustrates a system employing the enhanced signal separator 304 in conjunction with a signal demodulator 306 (e.g. a modem) in accordance with an embodiment of the present invention As shown in Figure 9, the enhanced signal separator 304 can be utilized to pre-process communication signals that are degraded by interference before being received by a demodulator 308.

As shown in Figure 9, communication signal S1 is degraded with inband interference S2. If this composite signal (S1 + S2) is input directly to a receive modem, the bit error rate may be seriously degraded due to the loss of performance caused by the inband interference S2. The BER will be degraded because the modem will receive S1 with a performance of S1/(N+S2). This is commonly referred to as the carrier power-to-noise + interference ratio. For example, if the power of S2 is equal to the power of the noise, N, then the receive performance of S1 will be degraded by 3 dB.

However, if the composite signal (S1 + S2) is processed by the enhanced separator 304, as shown in Figure 9, then the receive performance of S1 will be S1/(N+S2-S2**). If the estimate of S2** is close to S2, then the receive performance of S1 can approach S1/N, which is the performance that would be observed without the presence of the inband signal S2.

If estimate S2** produced by the signal separator 300 is defined as S2 + e where e is the difference between S2 and S2**, then the performance of the received signal will be S1/(N+e). As e approaches zero, the received performance will approach S1/N, which is the same performance that would be achieved without the inband signal S2.

The bit error rate (BER) of S1 will decrease as the carrier power-to-noise + interference ratio increases. If the interference power, represented by S2, can be significantly reduced, then the resulting BER of S1 can be dramatically lower.

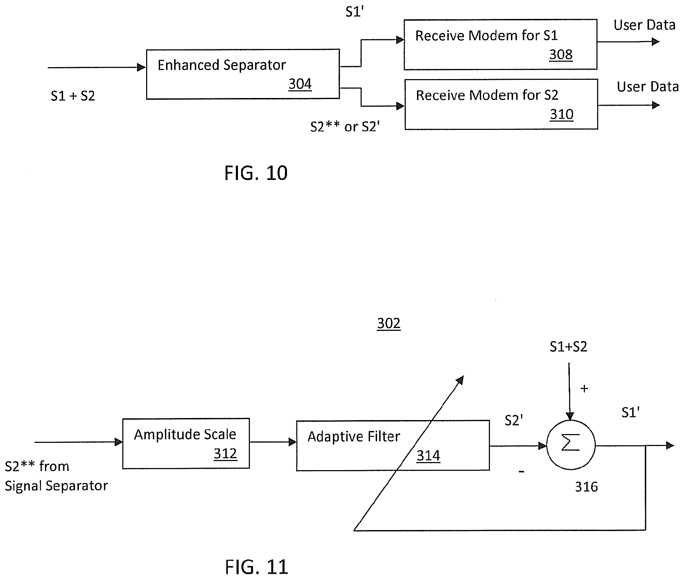

Figure 10 shows a second application for the enhanced signal separator 304 in accordance with an embodiment of the present invention. Specifically, Figure 10 illustrates a system employing the enhanced signal separator 304 in conjunction with two signal demodulators 308, 310. This configuration can be utilized when the inband signal S2 is another desired communication signal. Thus, rather than cancel this signal, the system can output both the improved version of S1 as well as one of the estimates of S2 (S2** or S2'). An advantage of this configuration is that two signals or more can be transmitted in the same bandwidth, which increases the transmit capacity of a given amount of bandwidth.

Figure 11 illustrates a block diagram of a performance improver 302 in accordance with an embodiment of the present invention. As shown in Figure 11, the signal S2** is input from the signal separator block 300 and is scaled in amplitude by amplitude scaling block 312 before being input to an adaptive filter 314 configured to perform noise cancellation. The output, S2', of the adaptive filter 314 is subtracted from the composite input signal, Si + S2, by summation block 316. As before, Si is the desired communication signal and S2 is an interfering signal. Filter taps of the adaptive filter 314 are adjusted to minimize the difference output of the summation block 316. In this case, the minimum difference will be the desired communication signal Si and will be achieved when the output of the adaptive filter 314, S2', exactly matches S2. In general, ST will be equal to S2+e and the resulting output Si' of the performance improver block 302 will be equal to SI-e. If e is much smaller than S2, then the resulting carrier power-to-noise + interference ratio will be greater than otherwise and the resulting BER will be lower. The parameters of the adaptive filter can be updated using an adaptive algorithm such as the LMS or other suitable adaptive algorithms.

The description above illustrates operation of embodiments of the invention and is not meant to limit the scope of the invention. It will be apparent to one skilled in the relevant art that variations will be encompassed by the scope of the invention and that the invention may be practiced in other embodiments. The system described herein may be implemented via a combination of hardware and software or entirely in hardware elements. Also, the particular division of functionality between the various system components described herein is merely exemplary. Thus, the methods and operations presented herein are not inherently related to any particular computer or other apparatus. Functions performed by a single system component may instead be performed by multiple components, and functions performed by multiple components may instead performed by a single component. It will also be apparent that process steps described herein can be embodied in software, firmware or hardware. Thus, the present invention or portions thereof may be implemented by apparatus for performing the operations herein. This apparatus may be specially constructed or configured, such as application specific integrated circuits (ASICs) or Field Programmable Gate Arrays (FPGAs), as a part of an ASIC, as a part of FPGA, or it may comprise a general-purpose computer selectively activated or reconfigured by a computer program stored on a computer readable medium that can be accessed and executed by the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, or any type of media suitable for storing electronic instructions, and or coupled to a computer system bus. Furthermore, the methods described in the specification may be implemented by a single processor or be implemented in architectures employing multiple processor designs for increased computing capability.

**Claims**

1.    A system for removing one or more inband signals (S2) from a received communication signal (S1+S2) comprising:

   a receiver (210) configured to receive (208) a signal (S1+ S2) that includes a desired communication signal (S1) and one or more unwanted inband signals (S2);
   a signal separator (100, 216, 300) configured to process the received signal (S1+S2) to form an estimate (S1*) of the desired communication signal and an estimate (S2**) of the inband signals, wherein the signal separator is configured to demodulate the received signal (S1+S2) to form a demodulated signal and to remodulate the demodulated signal to form the estimate (S1*) of the desired communication signal;
   the signal separator comprising an adaptive noise canceller (120) configured to use the estimate (S1*) of the desired communication signal to form a revised estimate (S1**) of the desired communication signal by minimizing a difference ε between the revised estimate (S1**) and the desired communication signal (S1);
   the signal separator being configured to delay the received signal (S1+S2) with respect to the revised estimate (S1**) and to determine a difference between the delayed signal (S1+S2) and the revised estimate (S1**), thereby to form the estimate (S2**) of the one or more inband signals, the adaptive noise canceller being configured to use the signal S2** as an error signal in a feedback loop to minimize S2**;
   the system further comprising:

a performance improver (302) configured to process the received signal (S1+S2) and the estimate (S2**) of the one or more inband signals to form an improved estimate (S1') of the desired communication signal and an improved estimate (S2') of the inband signals, wherein the performance improver (302) comprises an amplitude scaling block (312), an adaptive filter (314) and a summation block (316), the performance improver (302) being configured to scale the estimate (S2**) of the one or more inband signals in amplitude using the amplitude scaling block (312), and to input the scaled estimate into the adaptive filter (314); the performance improver (302) being further configured to subtract the output of the adaptive filter from the delayed (306) received signal (S1+S2) using the summation block (316) to form the improved estimate (S1') of the desired communication signal and the improved estimate (S2') of the inband signals; wherein the adaptive filter (314) comprises filter taps configured to minimize the difference output of the summation block (316).

2.  The system according to claim 1, wherein the power of the desired received communication signal (S1) is greater than the aggregate received power of the inband signals (S2) and the signal separator (100, 216, 300) is configured to use the greater power of the desired communication signal (S1) to lock to the desired communication signal (S1) to form the demodulated signal.

3.  The system according to claim 1, wherein the signal separator (100, 216, 300) is configured to form the estimate (S1**) of the desired communication signal and the estimate (S2**) of the inband signals using only the received signal (S1+S2) as input.

4.  The system according to claim 1, wherein the signal separator (100, 216, 300) at least temporarily stores a portion of the received signal (S1+S2) during said processing of the received signal (S1+S2).

5.  The system according to claim 1, wherein the system (200, 304) is configured to process the improved estimate of the one or more inband signals (S2') to determine their properties.

6.  The system according to claim 5, wherein the properties of the inband signal (S2) comprise spectral properties.

7.  The system according to claim 5, wherein the system (200, 304) is configured to display the properties of the one or more inband signals (S2) using a computer system display.

8.  The system according to claim 1, wherein the desired communication signal (S1) is a first desired communication signal and the one or more inband signals (S2) comprise a second desired communication signal that overlaps the first desired communication signal in both frequency and time and wherein the estimate (S2**) of the inband signals comprises an estimate of the second desired communication signal thereby the first and second desired communication signals are both recovered from the received signal (S1+S2); or
    wherein the desired communication signal (S1) is a first desired communication signal and the one or more inband signals (S2) comprise two or more additional desired communication signals that overlap the first desired communication signal in both frequency and time and wherein the system (200, 304) is configured to recursively process the estimate of the one or more inband signals (S2**) using at least the signal separator (100, 216, 300) to recover each of the two or more additional desired communication signals.

9.  The system according to claim 1, wherein the signal separator comprises an adaptive equalizer (102) or a matched filter.

10. The system according to claim 1, wherein the desired communication signal (S1) includes forward error correction information and the signal separator (300) is arranged to perform forward error correction (114) to improve the estimate of the desired communication signal (S1*).

11. The system according to claim 1, wherein the system (200, 304) is configured to re-sample the estimate of the desired communication signal (S1*) to match a sampling rate of the desired communication signal (S1).

12. The system according to claim 11, wherein the system (200, 304) is configured to perform pulse shaping (118) on the estimate of the desired communication signal (S1*).

13. The system according to claim 1, wherein the one or more inband signals (S2)comprise random noise; or
    wherein the one or more inband signals (S2) comprises an interfering signal having a source that is independent from that of the desired communication signal (S1).

14. A method of removing one or more inband signals (S2) from a received communication signal (S1+S2) comprising:

obtaining a received communication signal (S1+S2), the received communication signal (S1+S2) including a desired communication signal (S1) and one or more inband signals (S2);

processing the received communication signal (S1+S2) using a signal separator (100, 216, 300) to form an estimate (S1*) of the desired communication signal and an estimate (S2**) of the inband signals, wherein the signal separator (100, 216, 300) demodulates the received signal (S1+S2) to form a demodulated signal and remodulates the demodulated signal to form the estimate (S1*) of the desired communication signal and wherein the signal separator uses the estimate (S1*) of the desired communication signal to form a revised estimate (S1**) of the desired communication signal by minimizing a difference ε between the revised estimate (S1**) and the desired communication signal (S1);

delaying the received signal (S1+S2) with respect to the revised estimate (S1**) and determining a difference between the delayed signal (S1+S2) and the revised estimate (S1**), thereby to form the estimate (S2**) of the one or more inband signals, the signal S2** being used as an error signal in a feedback loop to minimize S2**;

processing the received signal (S1+S2) and the estimate (S2**) of the one or more inband signals using a performance improver (302) to form an improved estimate (S1') of the desired communication signal and an improved estimate (S2') of the inband signals, wherein processing the received signal (S1+S2) and the estimate (S2**) of the one or more inband signals by the performance improver (302) comprises:

scaling the estimate (S2**) of the one or more inband signals in amplitude using an amplitude scaling block (312);

inputting the scaled estimate into an adaptive filter (314); and

subtracting the output of the adaptive filter from the received signal (S1+S2) using a summation block (316) to form the improved estimate (S1') of the desired communication signal and the improved estimate (S2') of the inband signals;

wherein the difference output of the summation block (316) is minimized using filter taps of the adaptive filter (314).

15. A non-transitory computer readable media having stored thereon computer code which when executed by a processor (214) causes the processor (214) to perform a method of removing inband signals (S2) from a received communication signal (S1+S2) according to claim 14.

**Patentansprüche**

1. System zum Entfernen von einem oder mehreren Inband-Signalen (S2) aus einem empfangenen Kommunikationssignal (S1+S2), umfassend:

einen Empfänger (210), der dafür konfiguriert ist, ein Signal (S1+S2) zu empfangen (208), das ein erwünschtes Kommunikationssignal (S1) und ein oder mehrere unerwünschte Inband-Signale (S2) einschließt;

einen Signaltrenner (100, 216, 300), der dafür konfiguriert ist, das empfangene Signal (S1+S2) zu verarbeiten, um eine Schätzung (S1*) des erwünschten Kommunikationssignals und eine Schätzung (S2**) der Inband-Signale zu bilden, worin der Signaltrenner dafür konfiguriert ist, das empfangene Signal (S1+S2) zu demodulieren, um ein demoduliertes Signal zu bilden, und das demodulierte Signal erneut zu modulieren, um die Schätzung (S1*) des erwünschten Kommunikationssignals zu bilden;

wobei der Signaltrenner einen adaptiven Rauschunterdrücker (120) umfasst, der dafür konfiguriert ist, die Schätzung (S1*) des erwünschten Kommunikationssignals zu verwenden, um eine berichtigte Schätzung (S1**) des erwünschten Kommunikationssignals zu bilden, indem eine Differenz ε zwischen der berichtigten Schätzung (S1**) und dem erwünschten Kommunikationssignal (S1) minimiert wird;

wobei der Signaltrenner dafür eingerichtet ist, das empfangene Signal (S1+S2) in Bezug auf die überarbeitete Schätzung (S1**) zu verzögern und eine Differenz zwischen dem verzögerten Signal (S1+S2) und der überarbeiteten Schätzung (S1**) zu bestimmen, um dadurch die Schätzung (S2**) des einen oder der mehreren Inband-Signale zu bilden, wobei der adaptive Rauschunterdrücker dafür konfiguriert ist, das Signal S2** als ein Fehlersignal in einer Rückkopplungsschleife zu verwenden, um S2** zu minimieren;

wobei das System ferner umfasst:

einen Leistungsverbesserer (302), der dafür konfiguriert ist, das empfangene Signal (S1+S2) und die Schätzung (S2\*\*) des einen oder der mehreren Inband-Signale zu verarbeiten, um eine verbesserte Schätzung (S1') des erwünschten Kommunikationssignals und eine verbesserte Schätzung (S2') der Inband-Signale zu bilden, worin der Leistungsverbesserer (302) einen Amplitudenskalierungsblock (312), ein adaptives Filter (314) und einen Summationsblock (316) umfasst, wobei der Leistungsverbesserer (302) dafür konfiguriert ist, die Schätzung (S2\*\*) des einen oder der mehreren Inband-Signale unter Verwendung des Amplitudenskalierungsblocks (312) in der Amplitude zu skalieren und die skalierte Schätzung in das adaptive Filter (314) einzugeben;

wobei der Leistungsverbesserer (302) ferner dafür konfiguriert ist, die Ausgabe des adaptiven Filters unter Verwendung des Summationsblocks (316) vom verzögerten (306) empfangenen Signal (S1+S2) zu subtrahieren, um die verbesserte Schätzung (S1') des erwünschten Kommunikationssignals und die verbesserte Schätzung (S2') der Inband-Signale zu bilden; worin das adaptive Filter (314) Filterabgriffe umfasst, die dafür konfiguriert sind, die Differenzausgabe des Summationsblocks (316) zu minimieren.

2. System nach Anspruch 1, worin die Leistung des erwünschten empfangenen Kommunikationssignals (S1) größer ist als die aggregierte empfangene Leistung der Inband-Signale (S2) und der Signaltrenner (100, 216, 300) dafür konfiguriert ist, die größere Leistung des erwünschten Kommunikationssignals (S1) zu verwenden, um auf das erwünschte Kommunikationssignal (S1) einzurasten, um das demodulierte Signal zu bilden.

3. System nach Anspruch 1, worin der Signaltrenner (100, 216, 300) dafür konfiguriert ist, die Schätzung (S1\*\*) des erwünschten Kommunikationssignals und die Schätzung (S2\*\*) der Inband-Signale zu bilden, indem nur das empfangene Signal (S1+S2) als Eingabe verwendet wird.

4. System nach Anspruch 1, worin der Signaltrenner (100, 216, 300) während der Verarbeitung des empfangenen Signals (S1+S2) mindestens zeitweise einen Teil des empfangenen Signals (S1+S2) speichert.

5. System nach Anspruch 1, worin das System (200, 304) dafür konfiguriert ist, die verbesserte Schätzung des einen oder der mehreren Inband-Signale (S2') zu verarbeiten, um deren Eigenschaften zu bestimmen.

6. System nach Anspruch 5, worin die Eigenschaften des Inband-Signals (S2) spektrale Eigenschaften umfassen.

7. System nach Anspruch 5, worin das System (200, 304) dafür konfiguriert ist, die Eigenschaften des einen oder der mehreren Inband-Signale (S2) unter Verwendung einer Computersystemanzeige anzuzeigen.

8. System nach Anspruch 1, worin das erwünschte Kommunikationssignal (S1) ein erstes erwünschtes Kommunikationssignal ist und das eine oder die mehreren Inband-Signale (S2) ein zweites erwünschtes Kommunikationssignal umfassen, welches das erste erwünschte Kommunikationssignal sowohl in der Frequenz als auch in der Zeit überlappt, und worin die Schätzung (S2\*\*) der Inband-Signale eine Schätzung des zweiten erwünschten Kommunikationssignals umfasst, wodurch sowohl das erste als auch das zweite erwünschte Kommunikationssignal aus dem empfangenen Signal (S1+S2) wiedergewonnen werden; oder

worin das erwünschte Kommunikationssignal (S1) ein erstes erwünschtes Kommunikationssignal ist und das eine oder die mehreren Inband-Signale (S2) zwei oder mehrere zusätzliche erwünschte Kommunikationssignale umfassen, die das erste erwünschte Kommunikationssignal sowohl in der Frequenz als auch in der Zeit überlappen, und worin das System (200, 304) dafür konfiguriert ist, die Schätzung des einen oder der mehreren Inband-Signale (S2\*\*) mindestens unter Verwendung des Signaltrenners (100, 216, 300) rekursiv zu verarbeiten, um jedes der zwei oder mehreren zusätzlichen erwünschten Kommunikationssignale wiederherzustellen.

9. System nach Anspruch 1, worin der Signaltrenner einen adaptiven Entzerrer (102) oder ein angepasstes Filter umfasst.

10. System nach Anspruch 1, worin das erwünschte Kommunikationssignal (S1) Vorwärtsfehlerkorrekturinformationen einschließt und der Signaltrenner (300) dafür eingerichtet ist, eine Vorwärtsfehlerkorrektur (114) durchzuführen, um die Schätzung des erwünschten Kommunikationssignals (S1\*) zu verbessern.

11. System nach Anspruch 1, worin das System (200, 304) dafür konfiguriert ist, die Schätzung des erwünschten Kommunikationssignals (S1\*) erneut abzutasten, um eine Abtastrate des erwünschten Kommunikationssignals (S1) anzugleichen.

**12.** System nach Anspruch 11, worin das System (200, 304) dafür konfiguriert ist, Pulsformung (118) an der Schätzung des erwünschten Kommunikationssignals (S1*) durchzuführen.

**13.** System nach Anspruch 1, worin das eine oder die mehreren Inband-Signale (S2) Zufallsrauschen umfassen; oder worin das eine oder die mehreren Inband-Signale (S2) ein Störsignal umfassen, das eine Quelle aufweist, die unabhängig von der des erwünschten Kommunikationssignals (S1) ist.

**14.** Verfahren zum Entfernen von einem oder mehreren Inband-Signalen (S2) aus einem empfangenen Kommunikationssignal (S1+S2), umfassend:

Erlangen eines empfangenen Kommunikationssignals (S1+S2), wobei das empfangene Kommunikationssignal (S1+S2) ein erwünschtes Kommunikationssignal (S1) und ein oder mehrere Inband-Signale (S2) einschließt; Verarbeiten des empfangenen Kommunikationssignals (S1+S2) unter Verwendung eines Signaltrenners (100, 216, 300), um eine Schätzung (S1*) des erwünschten Kommunikationssignals und eine Schätzung (S2**) der Inband-Signale zu bilden, worin der Signaltrenner (100, 216, 300) das empfangene Signal (S1+S2) demoduliert, um ein demoduliertes Signal zu bilden, und das demodulierte Signal erneut moduliert, um die Schätzung (S1*) des erwünschten Kommunikationssignals zu bilden, und worin der Signaltrenner die Schätzung (S1*) des erwünschten Kommunikationssignals verwendet, um eine überarbeitete Schätzung (S1**) des erwünschten Kommunikationssignals zu bilden, indem eine Differenz $\varepsilon$ zwischen der berichtigten Schätzung (S1**) und dem erwünschten Kommunikationssignal (S1) minimiert wird; Verzögern des empfangenen Signals (S1+S2) in Bezug auf die berichtigte Schätzung (S1**) und Bestimmen einer Differenz zwischen dem verzögerten Signal (S1+S2) und der berichtigten Schätzung (S1**), um dadurch die Schätzung (S2**) des einen oder der mehreren Inband-Signale zu bilden, wobei das Signal S2** als ein Fehlersignal in einer Rückkopplungsschleife verwendet wird, um S2** zu minimieren; Verarbeiten des empfangenen Signals (S1+S2) und der Schätzung (S2**) des einen oder der mehreren Inband-Signale unter Verwendung eines Leistungsverbesserers (302), um eine verbesserte Schätzung (S1') des erwünschten Kommunikationssignals und eine verbesserte Schätzung (S2') der Inband-Signale zu bilden, worin das Verarbeiten des empfangenen Signals (S1+S2) und der Schätzung (S2**) des einen oder der mehreren Inband-Signale durch den Leistungsverbesserer (302) umfasst:

Skalieren der Schätzung (S2**) des einen oder der mehreren Inband-Signale in der Amplitude unter Verwendung eines Amplitudenskalierungsblocks (312); Eingeben der skalierten Schätzung in ein adaptives Filter (314); und Subtrahieren der Ausgabe des adaptiven Filters vom empfangenen Signal (S1+S2) unter Verwendung eines Summationsblocks (316), um die verbesserte Schätzung (S1') des erwünschten Kommunikationssignals und die verbesserte Schätzung (S2') der Inband-Signale zu bilden; worin die Differenzausgabe des Summationsblocks (316) unter Verwendung von Filterabgriffen des adaptiven Filters (314) minimiert wird.

**15.** Nichtflüchtiges computerlesbares Medium mit darauf gespeichertem Computercode, der, wenn er durch einen Prozessor (214) ausgeführt wird, den Prozessor (214) veranlasst, ein Verfahren zum Entfernen von Inband-Signalen (S2) aus einem empfangenen Kommunikationssignal (S1+S2) nach Anspruch 14 durchzuführen.

## Revendications

**1.** Système pour supprimer un ou plusieurs signaux intrabandes (S2) à partir d'un signal de communication reçu (S1+S2), comprenant :

un récepteur (210) qui est configuré pour recevoir (208) un signal (S1+S2) qui inclut un signal de communication souhaité (S1) et un ou plusieurs signaux intrabandes intempestifs (S2) ; un séparateur de signaux (100, 216, 300) qui est configuré pour traiter le signal reçu (S1+S2) pour former une estimation (S1*) du signal de communication souhaité et une estimation (S2**) des signaux intrabandes, dans lequel le séparateur de signaux est configuré pour démoduler le signal reçu (S1+S2) pour former un signal démodulé et pour moduler à nouveau le signal démodulé pour former l'estimation (S1*) du signal de communication souhaité ; le séparateur de signaux comprenant un dispositif d'annulation de bruit adaptatif (120) qui est configuré pour utiliser l'estimation (S1*) du signal de communication souhaité pour former une estimation révisée (S1**) du signal de communication souhaité en minimisant une différence ε entre l'estimation révisée (S1**) et le signal de communication souhaité (S1) ;

le séparateur de signaux étant configuré pour retarder le signal reçu (S1+S2) par rapport à l'estimation révisée (S1**) et pour déterminer une différence entre le signal retardé (S1+S2) et l'estimation révisée (S1**), pour former ainsi l'estimation (S2**) des un ou plusieurs signaux intrabandes, le dispositif d'annulation de bruit adaptatif étant configuré pour utiliser le signal S2** en tant que signal d'erreur dans une boucle de rétroaction pour minimiser S2** ;

le système comprenant en outre :

un dispositif d'amélioration de performance (302) qui est configuré pour traiter le signal reçu (S1+S2) et l'estimation (S2**) des un ou plusieurs signaux intrabandes pour former une estimation améliorée (S1') du signal de communication souhaité et une estimation améliorée (S2') des signaux intrabandes, dans lequel le dispositif d'amélioration de performance (302) comprend un bloc de mise à l'échelle de l'amplitude (312), un filtre adaptatif (314) et un bloc de sommation (316), le dispositif d'amélioration de performance (302) étant configuré pour la mise à l'échelle de l'estimation (S2**) des un ou plusieurs signaux intrabandes en amplitude en utilisant le bloc de mise à l'échelle de l'amplitude (312) et pour entrer l'estimation mise à l'échelle à l'intérieur du filtre adaptatif (314) ;

le dispositif d'amélioration de performance (302) étant en outre configuré pour soustraire la sortie du filtre adaptatif à partir du signal reçu (S1+S2) retardé (306) en utilisant le bloc de sommation (316) pour former l'estimation améliorée (S1') du signal de communication souhaité et l'estimation améliorée (S2') des signaux intrabandes ; dans lequel le filtre adaptatif (314) comprend des prises de filtre qui sont configurées pour minimiser la sortie de différence du bloc de sommation (316).

2.  Système selon la revendication 1, dans lequel la puissance du signal de communication reçu souhaité (S1) est plus importante que la puissance reçue agrégée des signaux intrabandes (S2), et le séparateur de signaux (100, 216, 300) est configuré pour utiliser la puissance plus importante du signal de communication souhaité (S1) pour se verrouiller sur le signal de communication souhaité (S1) pour former le signal démodulé.

3.  Système selon la revendication 1, dans lequel le séparateur de signaux (100, 216, 300) est configuré pour former l'estimation (S1**) du signal de communication souhaité et l'estimation (S2**) des signaux intrabandes en utilisant seulement le signal reçu (S1+S2) en tant qu'entrée.

4.  Système selon la revendication 1, dans lequel le séparateur de signaux (100, 216, 300) stocke au moins temporairement une partie du signal reçu (S1+S2) pendant ledit traitement du signal reçu (S1+S2).

5.  Système selon la revendication 1, dans lequel le système (200, 304) est configuré pour traiter l'estimation améliorée des un ou plusieurs signaux intrabandes (S2') pour déterminer leurs propriétés.

6.  Système selon la revendication 5, dans lequel les propriétés du signal intrabande (S2) comprennent des propriétés spectrales.

7.  Système selon la revendication 5, dans lequel le système (200, 304) est configuré pour afficher les propriétés des un ou plusieurs signaux intrabandes (S2) en utilisant un affichage de système informatique.

8.  Système selon la revendication 1, dans lequel le signal de communication souhaité (S1) est un premier signal de communication souhaité et les un ou plusieurs signaux intrabandes (S2) comprennent un second signal de communication souhaité qui chevauche le premier signal de communication souhaité à la fois en fréquence et en temps et dans lequel l'estimation (S2**) des signaux intrabandes comprend une estimation du second signal de communication souhaité, d'où il résulte que les premier et second signaux de communication souhaités sont tous deux récupérés à partir du signal reçu (S1+S2) ; ou

dans lequel le signal de communication souhaité (S1) est un premier signal de communication souhaité et les un ou plusieurs signaux intrabandes (S2) comprennent deux signaux de communication souhaités additionnels ou plus qui chevauchent le premier signal de communication souhaité à la fois en fréquence et en temps et dans lequel le système (200, 304) est configuré pour traiter de façon récursive l'estimation des un ou plusieurs signaux intrabandes (S2**) en utilisant au moins le séparateur de signaux (100, 216, 300) pour récupérer chacun des deux signaux de communication souhaités additionnels ou plus.

9.  Système selon la revendication 1, dans lequel le séparateur de signaux comprend un égaliseur adaptatif (102) ou un filtre adapté.

10. Système selon la revendication 1, dans lequel le signal de communication souhaité (S1) inclut une information de correction d'erreur en sens direct et le séparateur de signaux (300) est agencé pour réaliser une correction d'erreur en sens direct (114) pour améliorer l'estimation du signal de communication souhaité (S1*).

11. Système selon la revendication 1, dans lequel le système (200, 304) est configuré pour échantillonner à nouveau l'estimation du signal de communication souhaité (S1*) pour correspondre à une fréquence d'échantillonnage du signal de communication souhaité (S1).

12. Système selon la revendication 11, dans lequel le système (200, 304) est configuré pour réaliser une mise en forme d'impulsions (118) sur l'estimation du signal de communication souhaité (S1*).

13. Système selon la revendication 1, dans lequel les un ou plusieurs signaux intrabandes (S2) comprennent un bruit aléatoire ; ou
dans lequel les un ou plusieurs signaux intrabandes (S2) comprennent un signal d'interférence qui présente une source qui est indépendante de celle du signal de communication souhaité (S1).

14. Procédé de suppression d'un ou de plusieurs signaux intrabandes (S2) à partir d'un signal de communication reçu (S1+S2), comprenant :

l'obtention d'un signal de communication reçu (S1+S2), le signal de communication reçu (S1+S2) incluant un signal de communication souhaité (S1) et un ou plusieurs signaux intrabandes (S2) ;
le traitement du signal de communication reçu (S1+S2) en utilisant un séparateur de signaux (100, 216, 300) pour former une estimation (S1*) du signal de communication souhaité et une estimation (S2**) des signaux intrabandes, dans lequel le séparateur de signaux (100, 216, 300) démodule le signal reçu (S1+S2) pour former un signal démodulé et module à nouveau le signal démodulé pour former l'estimation (S1*) du signal de communication souhaité et dans lequel le séparateur de signaux utilise l'estimation (S1*) du signal de communication souhaité pour former une estimation révisée (S1**) du signal de communication souhaité en minimisant une différence ε entre l'estimation révisée (S1**) et le signal de communication souhaité (S1) ;
le retardement du signal reçu (S1+S2) par rapport à l'estimation révisée (S1**) et la détermination d'une différence entre le signal retardé (S1+S2) et l'estimation révisée (S1**), pour former ainsi l'estimation (S2**) des un ou plusieurs signaux intrabandes, le signal S2** étant utilisé en tant que signal d'erreur dans une boucle de rétroaction pour minimiser S2** ;
le traitement du signal reçu (S1+S2) et de l'estimation (S2**) des un ou plusieurs signaux intrabandes en utilisant un dispositif d'amélioration de performance (302) pour former une estimation améliorée (S1') du signal de communication souhaité et une estimation améliorée (S2') des signaux intrabandes ; dans lequel le traitement du signal reçu (S1+S2) et de l'estimation (S2**) des un ou plusieurs signaux intrabandes par le dispositif d'amélioration de performance (302) comprend :

la mise à l'échelle de l'estimation (S2**) des un ou plusieurs signaux intrabandes en amplitude en utilisant un bloc de mise à l'échelle de l'amplitude (312) ;
l'entrée de l'estimation mise à l'échelle à l'intérieur d'un filtre adaptatif (314) ; et
la soustraction de la sortie du filtre adaptatif à partir du signal reçu (S1+S2) en utilisant un bloc de sommation (316) pour former l'estimation améliorée (S1') du signal de communication souhaité et l'estimation améliorée (S2') des signaux intrabandes ;
dans lequel la sortie de différence du bloc de sommation (316) est minimisée en utilisant des prises de filtre du filtre adaptatif (314).

15. Support non transitoire lisible par ordinateur et comportant, stocké sur celui-ci, un code informatique qui, lorsqu'il est exécuté par un processeur (214), amène le processeur (214) à effectuer un procédé de suppression de signaux intrabandes (S2) à partir d'un signal de communication reçu (S1+S2) selon la revendication 14.

*FIG. 1*

_202_

_204_

_200_

_206_

_208_

Receiver
_210_

_212_

_214_

Signal
Processor

Signal
Separator
_216_

_218_    _220_

_FIG. 2_

FIG. 3

FIG. 4

FIG. 5

FIG. 6

S1 + S2 → | Signal Separator **300** | → S1\*\*
→ S2\*\*

**FIG. 7**

**304**

S1'

S1 + S2 → | Signal Separator **300** | → S2\*\* → | Performance Improver **302** | →
→ S2'

| Delay T2 **306** |

**FIG. 8**

S1 + S2 → | Enhanced Separator **304** | → S1' → | Receive Modem **308** | → User Data (information bits)

**FIG. 9**

S1'

Receive Modem for S1
308

User Data

Enhanced Separator
304

S1 + S2

Receive Modem for S2
310

User Data

S2** or S2'

FIG. 10

302

S1+S2

+

Amplitude Scale
312

Adaptive Filter
314

S2'

Σ

S1'

S2** from
Signal Separator

−

316

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110135043 A
- US 61266312

- US 7639761 B